# EUROPÄISCHE PATENTANMELDUNG

(11) **EP 1 659 055 A2**
(43) Veröffentlichungstag der Anmeldung: **24.05.2006**
(21) Anmeldenummer: 05405639.5
(22) Anmeldetag: 15.11.2005
(51) Int. Cl.: B62K 3/02

(54) **Leichtes Transportzweirad**

(30) Priorität: 17.11.2004 CH 18892004
(71) Anmelder: Merki, Gallus, 5417 Untersiggenthal (CH); Merki, Georg, 5610 Wohlen (CH)
(72) Erfinder: Merki, Gallus, 5417 Untersiggenthal (CH); Merki, Georg, 5610 Wohlen (CH)

(57) **Zusammenfassung**

Bei der Anmeldung handelt es sich um ein Zweirad, mit dem Lasten von der Grösse transportiert werden können, wie sie in einen durchschnittlichen Zweiradanhänger Platz finden, wobei das Zweirad nur unbedeutend länger und schwerer als ein herkömmliches Zweirad ist. Verschiedene Lastträger und Lasten, wie Kindersitze, Körbe und Behälter können schnell und sicher mit wenigen Handgriffen am Zweirad befestigt und wieder demontiert werden.

## Beschreibung

Um mit Zweirädern grössere Lasten zu transportieren, gibt es einerseits Anhänger, anderseits, besonders bei Fahrrädern, spezielle Lasträder.

Anhänger erzeugen einen zusätzlichen Rollwiderstand, sind gross, schwer und sperrig.
Möchte man z.B. auf dem Nachhauseweg noch grössere Mengen einkaufen oder die Kinder abholen und nach Hause transportieren ist es mühsam und störend, den ganzen Weg zur Arbeit und zurück den Anhänger mitzuschleppen.
Muss ein Koffer zum Bahnhof mitgenommen werden, ist ein grösserer Anhänger notwendig, der zusammen mit dem Fahrrad am Bahnhof abgestellt werden muss.

Die bis jetzt bekannten Lasträder sind relativ schwer und gross. Unbeladen sind sie im Alltag als Alltagsrad kaum anzutreffen.

Auf einem herkömmlichen Fahrrad zwei Kinder und zusätzliches Gepäck zu transportieren ist praktisch nicht möglich und auch gefährlich.
Ist ein Kindersitz an einem herkömmlichen Fahrrad montiert, so braucht es oft viel Geschick, dass das Fahrrad nicht stark schwankt, wenn sich das Kind im Sitz hin und her bewegt.
Zudem kann ein schwer beladenes herkömmliches Fahrrad, das gestossen wird oder steht, oft nur mit viel Kraft und Geschick daran gehindert werden umzukippen.

Der Erfindung liegt erstens die Aufgabe zugrunde, ein Zweirad zu schaffen, mit dem grössere Lasten transportiert werden können, wie der Inhalt eines Einkaufswagens, ein Koffer oder zwei Kinder, wobei das Zweirad nur unbedeutend schwerer und länger als ein übliches Zweirad ist, so dass das zu schaffende Zweirad unbeladen im Alltag ohne grössere Nachteile gegenüber einem herkömmlichen gefahren werden kann.

Der Erfindung liegt zweitens die Aufgabe zugrunde, ein Zweirad zu schaffen, mit dem die Hin- und Herbewegung von mitgeführten Kindern besser als bei einem herkömmlichen Fahrrad mit Kindersitz kontrolliert werden kann und das schwer beladen mit weniger Kraftaufwand am Umkippen gehindert werden kann als ein herkömmliches Fahrrad. Die Ladefläche soll zudem weder zu tief noch zu hoch sein, damit sie rückenschonend beladen werden kann.

Der Erfindung liegt drittens die Aufgabe zugrunde, ein Zweirad zu schaffen, an dem einfach und schnell mit wenigen Handgriffen Kindersitze, Behälter usw. befestigt und wieder demontiert werden können. Die Befestigungsvorrichtung muss stabil, sicher und leicht sein. Kinder müssen transportiert werden können, ohne dass sie jede Bodenunebenheit spüren, über die das Zweirad fährt.

Die erste und zweite Aufgabe werden erfmdungsgemäss mit den Merkmalen der Patentansprüche 1 bis 7 gelöst.
Ist der Abstand zwischen Tretlager und Hinterachse grösser als 0,55 m können grosse Lasten transportiert werden, ohne dass diese weit über das Hinterrad hinausragen oder dass das Zweirad nach hinten kippt. Durch den grossen Abstand zwischen Tretlager und Hinterachse können auch seitlich des Hinterrades gössere Lasten transportiert werden. Bei einem herkömmlichen Fahrrad ist die Länge z.B. der hinteren seitlichen Satteltaschen beschränkt durch den Platzbedarf der Fersen bei der Pedaldrehung.

Dadurch dass der Hinterraddurchmesser klein ist, ist das Lastrad nach der hier beschriebenen Erfindung trotzdem kaum länger als ein übliches Zweirad.

Folgende Punkte führen zu einem geringen Gewicht.
Erstens wird die Last über und in Fahrtrichtung gesehen seitlich des Hinterrades transportiert, nahezu symmetrisch zur Hinterachse. Das Hinterrad muss im Gegensatz zum Vorderrad zum Lenken nicht gedreht werden. Aus diesen zwei Gründen kann die Last unterstützt werden, mit kurzen und leichten Stützen, wobei die Kräfte in die Richtung der Stützen wirken.
Zweitens wird ein Teil der Last durch die Tragkonstruktion, die für Fahrer und Zweirad notwendig ist, unterstützt, wodurch ein Teil der Stützen der Lastkonstruktion schon durch den Rahmen vorhanden ist.
Drittens ist das Hinterrad klein, wodurch die Stützen zur Hinterachse kurz und leicht sind.

Die Hin- und Herbewegung von mitgeführten Kindern und das seitliche Umkippen des beladenen Zweirades kann besser kontrolliert werden als bei einem üblichen Fahrrad, da der Schwerpunkt der Last durch das kleinere Hinterrad tiefer liegt, als bei einem üblichen Fahrrad.

Die dritte Aufgabe wird erfindungsgemäss mit den Merkmalen der Patentansprüche 7 und 8 gelöst, wobei die Federwirkung durch einen gefederten Rohreinsatz erzielt wird wie bei einer gefederten Sattelstützen oder einem Stossdämpfern. Wird ein Stein überfahren, so zeigt die Kraft, die auf das Zweirad wirkt, entgegengesetzt zur Fahrtrichtung nach oben. Um eine gute Federwirkung zu erhalten, wurde für das Rohr diese Richtung gewählt. Bei einer Hinterradfederung kann auf eine zusätzliche Federung verzichtet werden.
Dadurch, dass das Rohr gleichzeitig auch ein Teil der Tragkonstruktion für das Zweirad und den Fahrer ist, kann das Gewicht für die Befestigung gering gehalten werden.
Durch einen Schnellspanner kann das Stützrohr im Rahmenrohr befestigt werden, wie die Sattelstütze im Sattelrohr.
Lastträger und Lasten, wie Kindersitze, Behälter usw. können an zusätzlichen Stellen befestigt werden, wie an der Sattelstange oder an einem Gepäckträger oder auch z.B. auf einem Gepäckträger aufliegen.

Bekannt sind zweirädrige Lasträder, mit denen die Last vor der Lenkstange transportiert wird. Gegenüber diesen Rädern ist der Vorteil des Lastrades nach der hier beschriebenen Erfindung, dass die Last, in Fahrtrichtung gesehen, nahezu symmetrisch über und seitlich der tragenden Hinterachse platziert wird, wodurch die lasttragende Konstruktion einfach und leicht ist und, falls sie ungefedert ist, direkt auf der Hinterachse abgestützt werden kann.

Das Hinterrad muss zudem nicht wie das Vorderrad zum Lenken gedreht werden. Wird eine grosse Last beim Lenken mitgedreht, so braucht es zum Lenken viel Kraft und schnelle Richtungsänderungen sind nicht möglich. Soll die vorne liegende Last beim Lenken nicht mitgedreht werden, so kann sie nicht direkt auf der Vorderachse abgestützt werden, wodurch eine massive und somit schwere Konstruktion erforderlich ist, wobei ein zusätzlicher Nachteil darin besteht, dass die vorne liegende Last nicht symmetrisch über der Achse verteilt werden kann. Liegt die Last vor der Lenkstange, so wird der zur Verfügung stehende Platz durch den Lenker und die Lenkstange und das beim Lenken drehende Rad stark eingeschränkt. Es gibt Lasträder, die nach vorne verlängert sind, d.h der Lenker nicht direkt mit der Gabel verbunden ist. Diese Lasträder sind jedoch lang und schwer und somit unbeladen keine Alltagsräder.

Es gibt auch dreirädrige Lasträder. Bei einigen wird die Last vorne, bei anderen hinten transportiert.
Der Vorteil des Lastrades nach der hier beschriebenen Erfindung gegenüber diesen Rädern ist, dass mit zwei gegenüber drei Rädern Gewicht gespart werden kann, die tragende Konstruktion einfacher und leichter ist, da im Gegensatz zum Dreirad beinahe keine Kräfte parallel zu den Achsen wirken. Mit dem Zweirad können Kurven mit einer höheren Geschwindigkeit durchfahren werden, da man sich in die Kurve legen kann und so nicht umkippt. Schmale und unwegsame Wege können mit einem Zweirad befahren werden, die mit einem Dreirad oder einem zweirädrigen Anhänger nicht mehr passierbar sind. Der Platzbedarf eines Zweirades ist kleiner.

Im Gegensatz zu anderen Lasträdern ist vorgesehen (aber nicht zwingend vorgesehen) den Rahmen des Zweirades nach der hier beschriebene Erfindung auf die Tragkonstruktion, die für Fahrer und Zweirad notwendig sind zu reduzieren. Für grössere Lasten wird eine zusätzliche Lastragkonstruktion am Rahmen befestigt, dies kann ein üblicher Gepäckträger für Fahrräder mit kleinen Raddurchmessern sein, ein Korb mit Stützen, ein Behälter für Lasten oder Kindersitze, die z.B. gefedert bei der Hinterachse und an dem Rahmen befestigt sind. Dies hat mehrere Vorteile. Die Wahrscheinlichkeit wird stark reduziert, dass der Rahmen beschädigt wird, z.B. wenn das Zweirad umkippt. Der Rahmen wird durch die Pedale, den Lenker, die Räder und ev. durch eine zusätzlich montierte Tragkonstruktion geschützt, die weiter vorstehen. Ein beschädigter Rahmen ist ein Sicherheitsrisiko. Eine beschädigte Lastkonstruktion kann repariert oder durch eine neue ersetzt werden.
Die Lastkonstruktion ist weniger solide und starr als der Rahmen und wird somit leichter und federnder gebaut.
Rahmen und Lastträger sind zwei Module, d.h. ans gleiche Zweirad oder an den gleichen Zweiradtyp können verschiede Lastträger z.B. mit Schnellspannern befestigt werden oder auch keiner.

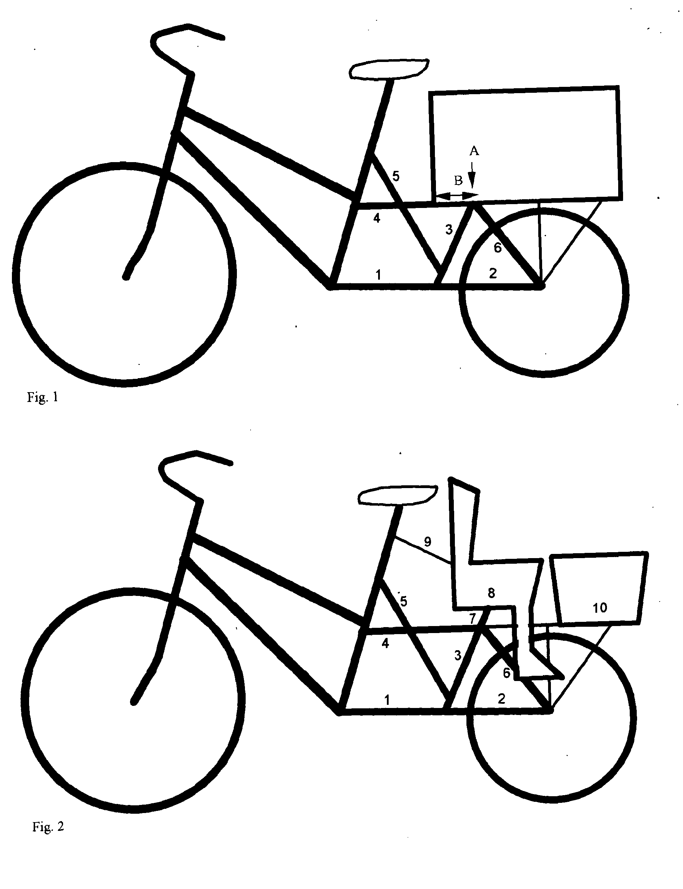

Nachfolgende wird ein Ausführungsbeispiel der Erfindung anhand zweier Zeichnungen erläutert Es zeigt die Fig. 1 ein Fahrrad in einer schematischen Ansicht von der Seite.
In Fig. 1 bedeutet (1) und (2) ein Doppelrohr, zwei nahezu parallele Rohre, vom Tretlager zur Hinterachse. Das Rohr (3) ist ein Einzelrohr, in das zur Befestigung von Lastträgern oder Lasten verschiedene Stützrohre gesteckt werden können, wenn notwendig gefedert.
Das Rohr (3) ist unten mit dem Doppelrohr (1) und (2) verbunden.
Oben verbindet das Rohr (4) das Rohr (3) mit der Sattelstange. Das Rohr (5) verläuft von der Sattelstange über das Rohr (4) zum Rohr (3) unten. Die zwei Rohre (6) beginnen bei der Hinterachse und enden oben am Rohr (3).
Am Fahrrad ist ein Normbehälter mit den Massen 60 cm · 40 cm - 34 cm (L·B·H) befestigt.
Es zeigt die Fig. 2 ein Fahrrad mit schematischer Sicht von der Seite. In der Fig. 2 ist am Fahrrad ein Kindersitz (8) befestigt durch die federnde Stütze (7). Ähnlich können auch zwei nebeneinanderliegende, fest verbundene Kindersitze befestigt werden, nur etwas tiefer. Die Befestigung (9) ist von oben gesehen ein gleichseitiges Dreieck, mit der Spitze bei der Sattelstange. Die Befestigung (9) verhindert ein seitliches Kippen, lässt aber eine vertikale Federung zu. Hinten auf dem Gepäckträger befindet sich ein Korb (10).

## Patentansprüche

1. Zweirädriges Fahrzeug für aufrechte Haltung, **dadurch gekennzeichnet, dass** der Abstand zwischen Tretlager und Hinterradachse grösser als 0,55m und gleichzeitig der Hinterraddurchmesser kleiner als 0,6m ist.

2. Zweirädriges Fahrzeug nach Anspruch 1, **dadurch gekennzeichnet, dass** über dem Hinterrad grössere Lasten mit tiefem Schwerpunkt transportiert werden können.

3. Zweirädriges Fahrzeug nach Anspruch 1 und 2, **dadurch gekennzeichnet**, in Fahrtrichtung gesehen auf beiden Seiten des Hinterrades Lasten transportiert werden können.

4. Zweirädriges Fahrzeug nach Anspruch 1 und 2, **dadurch gekennzeichnet, dass** mit einem Teil des Hinterbaus, der als Tragkonstruktion für Fahrerin oder Fahrer und Zweirad notwendig ist, auch eine Last, z.B. ein Korb unterstützt werden kann (A).

5. Zweirädriges Fahrzeug nach Anspruch 1, 2 und 3, **dadurch gekennzeichnet, dass** auf einer Verstrebung oder auf Verstrebungen, z.B. einem Rohr oder Rohren, die für die Tragkonstruktion für Fahrerin und Zweirad notwendig ist oder sind, eine Last auf einer Länge von mindestens 0,05m (B) ev. gefedert aufliegen und befestigt werden kann, wobei die Verstrebung oder die Verstrebungen einen Winkel zwischen plus und minus 15° zur' Horizontalen bilden.

6. Zweirädriges Fahrzeug nach Anspruch 1, 2, 3 und 5, **dadurch gekennzeichnet, dass** am Zweirad ein Gepäckträger oder ein Korb usw. befestigt werden kann, so dass die Verstrebungen, die in Anspruch 5 speziell erwähnt werden, und die Oberseite des Gepäckträgers oder die Unterseite des Korbes usw. eine nahezu horizontale Linie oder Ebene bilden, die eine Last tragen kann, wobei anstelle des Gepäckträgers auch die Tragkonstruktion, die für Fahrer und Zweirad notwendig ist, durch eine fest mit der Tragkonstruktion verbundene Konstruktion ergänzt werden kann.

7. Zweirädriges Fahrzeug, **dadurch gekennzeichnet, dass** neben dem Steuerrohr und dem Sattelrohr mindestens ein weiteres Rohr im Rahmen integriert oder am Rahmen befestigt ist (3), in das ein Rohr gesteckt werden kann, das an einem Korb befestigt ist oder an einem Kindersitz usw. ähnlich wie die Sattelstütze, die am Sattel befestigt ist, wobei die verschiedenen Lastträger oder Lasten noch an weiteren Orten befestigt oder unterstützt sein können.

8. Zweirädriges Fahrzeug nach Anspruch 1, 2 und 7, **dadurch gekennzeichnet, dass** das Rohr (3), dass im Anspruch 7 speziell erwähnt wurde sowohl eine Befestigungsmöglichkeit für verschiedene Lastmodule, wie Kindersitze, Körbe usw. ist, wie auch ein Teil der Tragkonstruktion, die für das Zweirad und den Fahrer notwendig ist.
